# EUROPEAN PATENT SPECIFICATION

(11) **EP 1 011 045 B1**
(45) Date of publication and mention of the grant of the patent: **06.01.2010**
(21) Application number: 99308584.4
(22) Date of filing: 29.10.1999
(51) Int. Cl.: G06F 9/46, G06F 9/48

(54) **Object-oriented job scheduler**
Objektorientierter Job scheduler
Ordonnanceur de tâches orienté objet

(30) Priority: 19.12.1998 GB 9827891
(43) Date of publication of application: 21.06.2000
(73) Proprietor: Fujitsu Services Limited, London, EC2A 1SL (GB)
(72) Inventor: Weaver, Gary, Reading, Berkshire RG6 7HX (GB); Muckley, Stuart, Reading, Berkshire RG2 8SX (GB)
(74) Representative: Brandon, Paul Laurence

(56) References cited:
- HOEGL H: "GPC - A JOB SCHEDULER (NOT ONLY) FOR RADAR IMAGE PROCESSING" GERMAN AEROSPACE CENTER, 11 September 1998 (1998-09-11), pages 1-11, XP002229879
- ANONYMOUS: "Solstice Job Scheduler Pro White Paper" WHITE PAPER, [Online] 4 August 1997 (1997-08-04), pages 1-9, XP002313276 CA, USA Retrieved from the Internet: URL:http://web.archive.org/web/19970804172 513/http://www.sun.com/solstice/em-product s/network/job.sched.pro.wp.html> [retrieved on 2005-01-12]
- ANONYMOUS: "Compaq Batch Scheduler for Windows NT" WHITE PAPER, [Online] 1998, pages 1-8, XP002313277 USA Retrieved from the Internet: URL:http://www.savingsdream.com/PDF/CPQSTR /DSCPQSTR103058.PDF> [retrieved on 2005-01-12]
- PHILIPPE TROIN: "Manpages CRON/CRONTAB" , [Online] 20 December 1993 (1993-12-20), pages 1-9, XP002326044 Retrieved from the Internet: URL:http://www.fifi.org/cgi-bin/man2html/u sr/share/man/man1/crontab.1.gz>

## Description

### Background to the Invention

This invention relates to an object-oriented job scheduler, for controlling the execution of a number of jobs in a computer system.

In a large computer system, job scheduling can be complex, involving running many jobs at different intervals and under varying conditions. For example, some jobs may need to be performed monthly, others weekly, and others on specified dates. Moreover, it may be required to run a certain job only when one or more other jobs, on which it is dependent, are completed.

Object-oriented design techniques are well known in data processing systems. Such techniques involve the use of objects to represent real-world things of interest. An object generally has one or more data attributes, and provides a set of operations (or methods) for accessing those attributes and performing operations on them.

H.Hogl, "GPC - A Job Scheduler (not only) for Radar Image Processing", German Aerospace Centre, 11th September 1988, pages 1-11, XP002229879 describes a job scheduler in which processes are represented as scheduled objects (SOBs). Task processing is triggered by devaluating incoming processing requests (PRs). A PR contains a number of components equal to the number of elements in a specific array of SOBs.

The job scheduler GPC receives a number of "incoming" processing requests, which each comprise parameters for a task. Each processing request is assembled by foreign software that is external to the job scheduler (page 8). The processing requests are placed in a queue in the job Scheduler. The job scheduler selects or activates a processing request from the queue for execution based upon the set of activation rules in order to manage work flow and prioritise tasks (page 1, first paragraph and page 6, "GPC main loop"). The rules include considerations such as when the incoming processing request was received and the availability of CPU and memory resources (page 1, first paragraph). Once a processing request has been selected for execution, a task working directory tree is created to establish a number of executable steps. The steps are executed and once the steps are complete a result file is created. Where the steps are completed successfully and the result file indicates an "OK" status, the task working directory tree is deleted. Alternatively, where the result file indicates an error, the task working directory tree is archived for a manual debugging process.

The object of the present invention is to provide a job scheduler using object-oriented technology techniques, which can efficiently deal with repetitive jobs.

According to one aspect of the invention there is provided a computer system including an object-oriented job scheduler a claimed in claim 1 below According to another aspect of the invention there is provided a method for scheduling jobs in a computer system, as claimed in claim 9 below.

One computer system embodying the invention will now be described by way of example with reference to the accompanying drawings.

### Brief Description of the Drawings

Figure 1 is a block diagram of a computer system embodying the present invention.
Figure 2 is a block diagram of a Job Scheduler Utility Object component.
Figure 3 is a block diagram of a Job Scheduler Application Object component.
Figure 4 is a flowchart showing the operation of a Job Service component.

### Description of an Embodiment of the Invention

The invention may be implemented on any known computer system capable of supporting object-oriented processing. For example, the system may comprise an ICL XtraServer, running Microsoft Transaction Server (MTS) software.

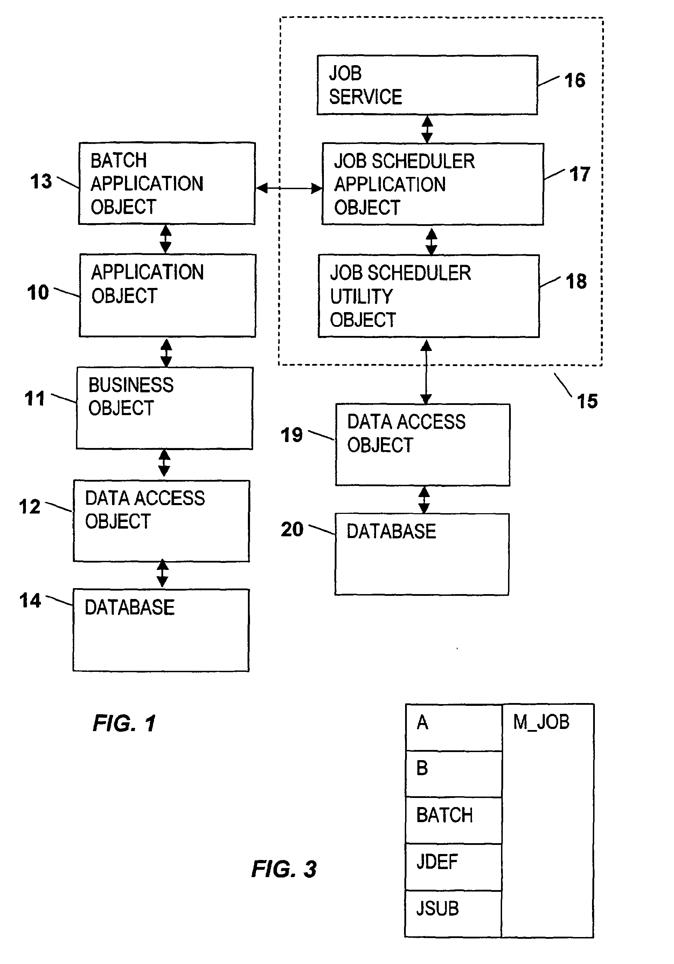

Figure 1 shows an overall view of the main components of the system. These include Application Objects 10, Business Objects 11, Data Access Objects 12, and Batch Application Objects 13. The exact nature of these objects does not form any part of the present invention and so they will be described only briefly.

A Business Object represents a real-world concept such as a person, business, address or account. Each Business Object that has persistent data has a Data Access Object associated with it. The Data Access Objects provide access to a database 14, which stores persistent data associated with the Business Objects.

The Application Objects provide processes that may be performed on the Business Objects, such as calculating the amount of tax due from an individual or business. The services of an Application Object may be accessed by an online user, or by other Application Objects.

A Batch Application Object (hereinafter referred to as a Batch AO) provides a way of performing batch processing operations, using the services of a particular Application Object. It should be noted that the batch processing is performed using the same Application Objects as are used for on-line processing. In general, the processing performed by a Batch AO consists of a series of processing units. A processing unit is defined herein as the processing for a single target object on which the batch job is operating, e.g. a single account, person, property, etc. A Batch AO may also contain a number of checkpoints, which divide it into sections, each containing a number of processing units.

In the following description, batch processes are referred to as "jobs". Each job may be assigned to a particular job stream. For example, in a local government application, separate streams may be created for Business Rate calculations and Council Tax calculations. Any jobs that have not been assigned to a specific stream are considered to belong to an "Unstreamed" stream. As will be described, each job may have repetition frequency information associated with it, enabling a single job to be run many times without the user having to resubmit it. For example a job can be run on a particular day of the week, or day of the month.

In operation, each job will live through three stages of evolution:
■ Definition: the details of the job are defined, but the job will not be executed.
■ Submission: a first run is created for the job, and this job run becomes a candidate for execution.
■ Execution: the job run is executed. After the current job run has been executed, a new job run is created as necessary, using the frequency information, and this new run is submitted for execution.

Scheduling of jobs (batch processes) is performed by means of an object-oriented job scheduler 15. This includes the following components: a Job Service 16, a Job Scheduler Application Object 17 (hereinafter referred to as the Job Scheduler AO), and a Job Scheduler Utility Object 18. The Job Scheduler Utility Object also has an underlying Data Access Object 19 and database 20 of its own, for storing persistent data associated with the job scheduler.

### Job Scheduler Utility Object

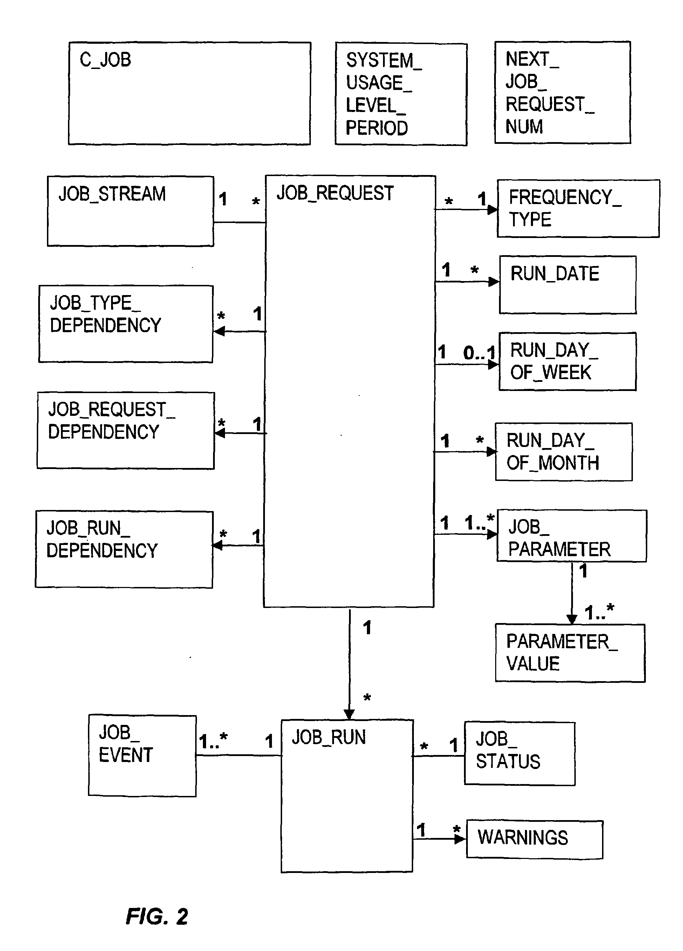

Figure 2 shows the Job Scheduler Utility Object in more detail. This component is used to define, submit and manage jobs. It consists of a number of objects, each represented as a box in this Figure. Relations between objects are indicated by lines connecting the objects. Arrow heads on the lines point from a main object to a secondary object. The symbols "*" and "1" indicate a many-to-one relationship between objects. For example, the Job_run object is secondary to the Job_request object, and there are potentially several Job_run objects for each Job_request object. Each of the objects within the Job Scheduler Utility Object will now be described in turn.

All access to the objects within the Job Scheduler Utility Object is by way of an interface object referred to as C_Job.

There may be many instances of C_Job running at once: one for each job stream, and any number for unstreamed jobs. C_Job does not have any attributes, but contains a number of operations that can be called from the Job Scheduler AO, including the following:
■ Add operations for creating new instances of Job_request, Job_run, Job_run_dependency, Job_request_dependency, Job_type_dependency, Run_date and Run_day_of_month objects.
■ Remove operations for destroying these objects.
■ Find operations, for locating objects that satisfy specified conditions.
■ Get and Set operations for getting and setting the values of attributes within these objects.

Job_request is a main object, representing a job that has been defined (but not necessarily submitted yet). The Job Scheduler Utility Object may contain several instances of this object, one for each job that has been defined. At any given time, each instance of C_Job may have only a single instance of Job_request that is current and populated (i.e. loaded from the database 20). Job_request includes the following attributes:
■ *ao*_*name:* the name of the Batch AO which is to perform the job request.
■ *ao_method:* the particular method (process) within the Batch AO that is to be called.
■ *job_request_number:* a sequence number, which is automatically incremented to distinguish the current job request from any previous job requests with the same ao_name and ao_method.
■ *job_descriptor*: a text description of the job.
■ *defined*_*by*: the identity of the user who defined the job.
■ *planned_run_date:* the date on which it is proposed to run this job.
■ *output_requested_by*: the name of the user requesting an output.
■ *frequency_duration:* the total number of times the job is to be run. For example, if a job is set to run on Tuesdays, and *frequency_duration*=10, then it will be run every Tuesday, for ten weeks.
■ *repeat_cycle*: the length of the repeat cycle for the job. For example, if a job is set to run on Tuesdays, and *repeat_cycle*=2, then it will be run every second Tuesday.
■ *submitted_by*: the identity of the user who submitted the job.
■ *last_processing_check*: a timestamp, indicating when the Batch AO last reported that it had completed a unit of processing. Using this timestamp, the Job Service can determine the elapsed time since the last processing unit was completed, and if this is greater than a predetermined threshold value, the Job service will assume that the Batch AO has crashed.
■ *next_run_number*: the current highest job run number for this job request.

Job_request contains a number of operations, including:
■ Add operations, for creating new Job_parameter, Job_run, Job_run_dependency, Job_type_dependency, Run_date, and Run_day_of_month objects.
■ Remove operations, for destroying objects created by the Add operations.
■ Get operations, for returning the values of attributes such as *ao_name, ao_method,* and *frequency_duration*. Other Get operations return references to associated objects, such as Job_run, Frequency_type, and Job_stream.
■ Set operations, for setting the values of the attributes.

Each Job_request may have a number of Job_run objects associated with it. Each of these represents a particular run of the job represented by the Job_request. Whenever a Job_request object is made current, the latest Job_run object associated with it is also loaded from the database 20. Job_run includes the following attributes:
■ *job_run_number*: this is a sequence number, used to distinguish different job runs for the same job request. It will equal 1 for the first job run for the job request, 2 for the second, and so on.
■ *actual_run_date*: the actual date on which the job run is to be (or was) executed.
■ *is_high*: a true/false flag indicating whether the system monitoring level is high. If the monitoring level is high, each processing unit will take much longer to complete.
■ *reason_for_mode*: a text string, which indicates the reason for the monitoring level setting.
■ *restart_attempts*: the number of times the job service has attempted to restart a failed job.
■ *restart_info*: information enabling a failed job to be restarted at any point of execution.
■ *priority*: the priority of this job run. The priority can be any one of the values A to J, with A being the highest value. By default, the priority may be an empty string, which is treated as the lowest priority value. Job runs with higher priorities will be executed before those with lower priority.
■ *submission_time*: the time at which the job was submitted. If two or more job runs have the same priority (or have no priority set), the order of execution will be determined by their submission times: the earliest-submitted job will be executed first.

Job_run contains a number of operations, including:
■ Add operations for creating new Job_status or Warnings objects associated with this Job_run.
■ Operations for getting and setting the values of its attributes such as *actual_run_date*, and *priority*.

Each Job_run has one Job_status object associated with it. This has a single attribute representing job *status*, as well as a single operation for getting the value of this parameter. A Job_status object is provided for each of a number of possible job status values, and each Job_status may be associated with any number of Job_run objects. The following job status values are possible:
■ Defined: the job details have been defined (in a Job_request), but the job has not yet been submitted for execution. This status is not actually represented by a Job_status object, but is implied by the absence of any Job_run for the Job_request.
■ Submitted: the job run is awaiting execution.
■ Running: the job run is currently being executed.
■ Completed_sucessfully: the job run finished normally, with no warnings reported.
■ Completed_sucessfully_with_warnings: the job run finished normally, but with warnings reported.
■ Paused: the stream to which the job belongs was paused.
■ Manually_stopped: the user has intervened to stop the job.
■ Failed: the job run failed.

Each Job_run may also have one or more Job_Event objects associated with it. These represent events that occur during the job run. Job_event has the following attributes, and includes operations for getting and setting these attributes.
■ *start_date_time, end_date_time*: these define the time period for the event.
■ *total_processing_units*: the total number of processing units to be performed for the job run.
■ *units_processed*: the number of units processed so far.
■ *stage_description*: a text description of the current stage of execution of the job run.
■ *processing_comment*: this is recorded each time one unit of the job is completed. If the job run fails, an error message is appended, describing what has happened.

These last two attributes can be displayed to any user monitoring the job.

Each Job_run may also have a number of Warnings objects associated with it. Each contains a single attribute, representing a warning text, as well as operations to get and set this text.

Each Job_request has one Frequency_type object associated with it. Frequency_type has a single attribute representing job frequency type, and a single operation, which returns the value of this attribute. Each Frequency_type object may be associated with any number of Job_request objects. The following job frequency types are defined:
■ Run on specified dates. (If only one date is specified, the job will run once only).
■ Run on specified days of the week. For example, a job can be specified to run on Tuesdays.
■ Run on specified days of the month. For example, a job can be specified to run on the 26th of the month. If a day is specified that does not exist in the current month (e.g. the 30th February) then the job is run on the last day of the month.
■ Run annually.
■ Link to existing job. In this case, the job will run when an existing job run completes.

If one of the first three frequency types is specified, each Job_request may have one or more Run_date, Run_day_of_week, or Run_day_of_month objects associated with it, according to the frequency type. Run_date has a single attribute, representing a run date, and operations for setting and returning the value of this attribute. Run_day_of_week has a single attribute representing a day of the week, and has operations for setting and returning the values of this attribute. Run_day_of_month has a single attribute, representing a day of the month, and has operations for setting and returning the values of this attribute. It should be noted that if, for example, a job is to run on Tuesdays and Thursdays, Job_request will have two associated Run_day_of_week objects.

If one of the first four frequency types is specified, Job_request may have one or more Job_type_dependency or Job_request_dependency objects associated with it. These define a job type or job request on which the current job request is dependent. In other words, this job is to be run only if another job of the specified type has run today, i.e. if the frequencies of the two jobs happen to give them the same run date).

Job_type_dependency has the following attributes, as well as operations for getting and setting the values of its attributes.
■ *ao*_*name* and *ao_method*: the combination of these two attributes specifies a particular job type.
■ *link*_*type*_*failure*: a true/false value which, if true, indicates that the dependent job is to be run if the job on which it depends fails.
■ *link_type_not_present*: a true/false value which, if true, indicates that the dependent job is to be run even if the job on which it depends is not present. This flag allows the dependent job to be run regardless of whether the linked job is run, but if the linked job has run the dependent job will be run after it. In other words, it can be used to ensure that jobs run in a specific order.
■ *link_type*_*success*: a true/false value which, if true, indicates that the dependent job is to be run if the job on which it depends completes successfully.
■ *link_type_success*_*warnings*: a true/false value which, if true, indicates that the dependent job is to be run if the job on which it depends completes successfully, but with a warning message.

Job_request_dependency has similar attributes and operations as those specified for Job_type dependency. In addition, it includes a *job_request*_*number* attribute, which together with *ao*_*name* and *ao_method* uniquely specifies a particular job.

Alternatively, if the frequency type is "Link to existing job", Job_request may have one or more Job_run_dependency objects associated with it. Each defines a job run on which this job is to be dependent. In this case, the job does not need a frequency of its own, since it will effectively inherit the frequency of the job it is linked to.

Job_run_dependency has similar attributes and operations to those specified for Job_request_dependency. In addition, it includes a *job_run_number* attribute, which together with *ao*_*name, ao*_*method* and *job_request*_*number* uniquely specifies a particular job run. It also includes a *once_only* attribute, and operations for getting and setting this attribute. This attribute is a true/false value which, if true, indicates that the dependent job is to be run once only.

Each Job_request is associated with one Job_stream object. A Job_stream object is provided for each job stream that has been defined, including the "unstreamed" stream. For example, in a local government application, there may be Job_stream objects for Business Rates and Council Tax. Each Job_stream may be associated with any number of Job_request objects.

Job_stream has the following attributes, as well as operations for getting and setting the values of its attributes.
■ *stream_name*: the name of the stream e.g. "Business Rates".
■ *start_time*: the earliest date at which jobs for this stream may be executed.
■ *end_time*: the latest date at which jobs for this stream may be executed. Any jobs still executing after this date has elapsed will be terminated automatically. A blank value means that no end time limit will be placed on executing jobs; they will continue to execute until they have completed.
■ *paused*: a true/false value which, if true, indicates that this stream is paused, i.e. no jobs are allowed to execute.

Each Job_request also has one or more Job_parameter objects associated with it, each representing a particular job-specific parameter. Job_parameter contains a single attribute, representing a parameter name, as well as operations for getting and setting the value of this attribute.

Each Job_parameter object has, in turn, one or more Parameter_value objects associated with it. Parameter_value contains a single attribute, representing a parameter value, as well as operations for getting and setting the value of this attribute.

A Next_job_request_num object is also provided. This contains attributes *ao_name, ao_method,* and *next_job_request_number*, and contains a single operation which returns the value of the attribute. This object is used for keeping track of the latest *job_request_number* allocated for a particular job type (where job type is defined as the combination of *ao_name* and *ao_method*).

The Job scheduler Utility Object also includes a System_usage_level_period object. An instance of this is created for each possible system usage period. This contains the following attributes.
■ *day*: an integer (1-7) representing a day of the week.
■ *period_number*: a sequential period number, that uniquely identifies a particular period within a day.
■ *start_time*, *end_time*: the start and end times of the period.
■ *on_line_usage*: the maximum number of online users that can be supported during this period.
■ *max_concurrent_jobs*: the job concurrency limit for this period, i.e. the maximum number of concurrent batch jobs that can be active during this period.

This object has operations for getting and setting the values of its attributes. It also has an operation for generating a new period number. This returns a unique sequential number, which is one greater than the previous number generated for the same day.

A system administrator may specify, for example, that 2 concurrent batch jobs and 20 online users are to be supported between the hours of 9am to 5pm, Monday to Friday. This enables the administrator to set an appropriate transaction interval to prevent batch jobs from unduly affecting online users.

### Candidate jobs

A job is a candidate for execution if it has a run date of today (i.e. the current system date) or earlier, and if it meets the following conditions:
■ Submitted jobs are candidates only if no outstanding dependencies exist.
■ Paused jobs will be accepted as candidates immediately, without examination of their dependencies, because the job could not have been started previously if it had any outstanding dependencies.
■ Failed jobs will be candidates if they have not exceeded a maximum allowable number of restarts.
■ Jobs that have failed due to a system crash will be accepted as candidates immediately, in the same way as paused jobs.
■ Failed/Resubmitted jobs are jobs that failed due to some problem internal to the job, and have been resubmitted manually. The user may have introduced additional dependencies when resubmitting the job, and so the dependencies need to be checked again.

### Job Scheduler Application Object

Referring to Figure 3, the Job Scheduler AO contains a main object M_Job, and five interface objects, each of which provides access to a predetermined subset of the facilities provided by this object. The five interfaces are as follows:
■ Interface A: a display-only interface, whereby a user can display details of a job.
■ Interface B: a controller interface.
■ BATCH: this interface is primarily used by the Job Service, to initiate execution of jobs. It is also used to communicate with Batch AOs.
■ JDEF: this interface allows users to define jobs.
■ JSUB: this interface allows users to submit previously defined jobs for execution.

There may be many instances of M_Job running at once. Each instance of M_Job in turn creates its own instance of C_Job. M_Job does not have any attributes, but contains a number of operations that can be called through one or more of its interfaces. Each of these operations may in turn result in one or more calls to C_Job, causing it to initiate actions within the Job Scheduler Utility Object.

M_Job includes the following operations.
■ AddJobRequest: create a new instance of the Job_request object, with specified *ao_name, ao_method* and *stream*_*name* attributes.
■ AddJobRequestDependency: create a Job_request_dependency object, associated with the current Job_request.
■ AddJobRun: create a Job_run object, associated with the current Job_request.
■ AddJobRunDependency: create a Job_run_dependency object, associated with the current Job_request.
■ AddJobTypeDependency: create a Job_type_dependency object, associated with the current Job_request.
■ AddRunDate: create a Run_date object, associated with the current Job_request.
■ AddRunDayOfMonth: create a Run_day_of_month object, associated with the current Job_request.
■ AddSystemUsageLevelPeriod: create a new System_usage_level_period object.
■ ChangeJobRequestPriority: increment or decrement the *priority* of the latest Job_run associated with the current Job_request.
■ EstablishCandidateJobRequest: search the job run objects to find the next candidate job (as defined above) in a specified job stream, and make it the current job. The order in which the jobs are selected to execute is determined by their priorities and submission times as explained above. This ordering is taken into account when determining which candidate job is the "next" one.
■ EstablishJobRequest: make a specified Job_request current.
■ ExecuteJob: execute the current job. M_Job creates an instance of the Batch AO specified by ao_name, and then calls the method within that object specified by ao_method. M_Job passes the Batch AO a reference to itself, so that the Batch AO can call it back. The status of the job is set to Running, and any changes made are saved to the database 20.
■ GetActiveStreams: return the names of all the currently active job streams. A stream is considered active if the stream start time has passed, the stream end time has not yet been reached, candidate jobs exist for the stream, and the stream is not paused.
■ GetJobConcurrencyLimit: returns the *max_concurrent_jobs* attribute from the System_usage_level_period object for the current system usage period.
■ IsJobFinished: returns a true/false value indicating whether the current job request has finished running. If a response has not been received from a running Batch AO for a predetermined time period, this will set the status of the job to failed.
■ IsUnstreamedActive: determine whether the "Unstreamed" stream is active.
■ KillRunningJobs: terminate all running jobs.
■ PauseStream: set the *paused* attribute of a specified Job_stream object to "true".
■ RestartPausedStream: resets the paused attribute of a specified Job_stream object to "false".
■ ResubmitJob: mark the latest job loaded for resubmission. It is only possible to resubmit a job that has failed or as been manually stopped.
■ SaveJobRequest: save all the data for the current job request in the database 20.
■ SetCheckpoint: used by the Batch AO to inform M_Job that the end of a job stage has been reached. In response to this call, M_Job commits any uncommitted units in the batch run, and updates the *restart_info* attribute in Job_run, so that the process can restart the next stage in the event of a failure.
■ SetFailure: used by the Batch AO to inform M_Job that a non-recoverable error was found during execution of the batch process. Again, *status* is updated, and a new Job_run is created.
■ SetJobParameter: associate a specified Job_parameter object with the current Job_request, and create a new Parameter_value object, containing a specified value for that parameter.
■ SetJobRequestFrequency: set the *frequency_duration* and *repeat_cycle* attributes of Job_request, and associate the Job_request with a specified Frequency_type object.
■ SetProcessingUnitComplete: used by the Batch AO to inform M_Job that a single processing unit (as defined above) has been completed. This operation increments the *units_processed* attribute in Job_event. If a catchable error occurred during the processing, the Batch AO passes a parameter representing a warning message, and M_Job creates a Warnings object to hold this message. The Batch AO also passes a parameter containing any information that should be recorded to enable the job to restart after a system crash; this is saved in the *restart_info* attribute of Job_run. If the current status of the job run is Paused or Manually_stopped, M_Job returns a parameter to the Batch AO, informing it that it should terminate its execution immediately. Any changes made to objects are saved in the database 20. This operation also loads information from the System_usage_level_period objects, and determines from this whether to commit the current transaction and initiate a new transaction in the Batch AO immediately, or to wait to allow time for processing online users' workload.
■ SetRunDaysOfWeek: associate a specified Run_day_of_week object with the current Job_request.
■ SetStandardJobDetails: update the standard job request details in the current Job_request. These details comprise the *job*_*descriptor, planned_run_date,* and *output_requested_by* attributes.
■ SetStreamStartTime: update the *start_time* of a specified Job_stream object.
■ SetStreamStopTime: update the *end_time* of a specified Job stream_object.
■ SetSuccess: update the status attribute in Job_status, and create a new Job_run for the next run of this job (if any), according to the relevant Frequency_type object. This operation is used by the Batch AO to inform M_Job that the job finished successfully.
■ SetSystemUsagePeriod: store updated values in System_usage_level_period for a specified day and period number.
■ SetTotalProcessingUnits: used by the Batch AO to inform M_Job of the total number of units that will processed during the current batch run. This operation sets the *total_processing_units* attribute in Job_event.

In addition to these operations, M_Job contains Remove operations for removing Run_date, Run_day_of_month, Job_request_dependency, Job_run_dependency, and Job_type_dependency objects created by the Add operations above.

### Job definition and submission

As mentioned above, in operation each batch job will live through three stages of evolution: definition, submission and execution.

In the job definition stage, the user can define a job, by making calls through the JDEF interface of the Job Scheduler AO. In particular, the user can perform the following actions:
■ Create a new job using AddJobRequest.
■ Set the job attributes, using SetStandardJobDetails.
■ Set the job parameters using SetJobParameter
■ Specify dependencies using SetJobRequestFrequency, AddJobRequestDependency, AddJobRunDependency, and AddJobTypeDependency.
■ Specify when the job is to run, using AddRunDate, AddRunDayOfMonth, and SetRunDaysOfWeek.

The user may recall any previously defined job that is still in the Defined state and amend its details or parameters.

After a job has been defined, the user can submit it for execution, by calling AddJobRun through the JSUB interface of the Job Scheduler AO. A Job_run object is created, containing details of the first job run, including the actual run date. The Job_run is set to the "Submitted" state. After it has been submitted, the job can no longer be amended.

### Job Service

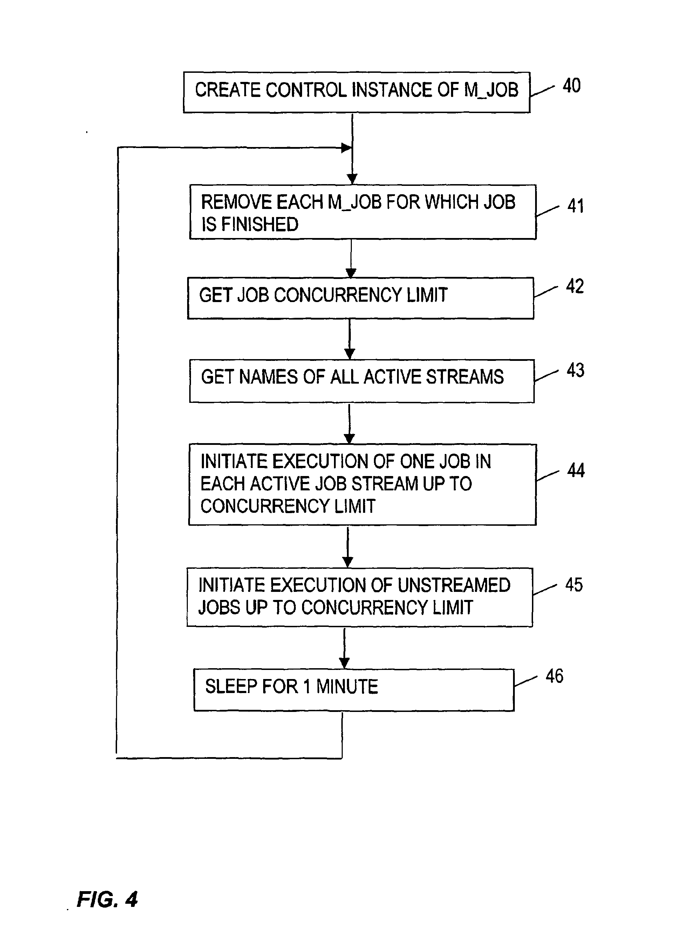

Figure 4 shows the operation of the Job Service 16.

(Step 40) When the Job Service starts up, it creates a control instance of M_Job. It then enters a loop (Steps 41-46) which is repeated for as long as the Job service is active.

(Step 41) The Job Service calls IsJobFinished in each currently loaded instance of M_Job in turn, to determine whether its current job has finished. If so, the Job Service removes that instance of M_Job.

(Step 42) The Job Service then calls GetJobConcurrencyLimit in the control instance of M_Job, to get the job concurrency limit (i.e. the maximum allowed number of concurrent jobs) for the current period.

(Step 43) The Job Service also calls GetActiveStreams in the control instance of M_Job, to get the names of all currently active job streams.

(Step 44) The Job Service then selects each active job stream in turn. If the total number of jobs running is less than the job concurrency limit, and if there is no existing M_Job for this stream, the Job Service creates a new instance of M_Job, and calls EstablishCandidateJobRequest in the new M_Job, to locate the next candidate job in this stream. If there is a candidate job, ExecuteJob is called in the new M_Job, to initiate execution of that job. Otherwise, the new M_Job is removed.

Thus, the Job Service initiates execution of one job in each active job stream, up to the job concurrency limit.

(Step 45) The Job Service then calls IsUnstreamedActive in the control instance of M_Job, to determine whether the unstreamed stream is active. If so, a series of new instances of M_Job are created, while the total number of jobs running is less than the job concurrency limit. For each new M_Job, the Job Service calls EstablishCandidateJobRequest to locate the next candidate job in this stream. If there is a candidate job, ExecuteJob is called in the new M_Job, to initiate execution of that job. Otherwise, the new M_Job is removed.

Thus, the Job Service initiates execution of any number of unstreamed jobs, up to the job concurrency limit.

(Step 46) The Job Service then goes to sleep for a predetermined period of time (in this example, 1 minute), before returning to the start of the loop (Step 41).

### Some possible modifications

It will be appreciated that many modifications may be made to the system described above without departing from the scope of the present invention as disclosed by the appended claims. For example, the invention may be implemented using software other than MTS to support objects.

## Claims

1. A computer system (10 - 20) including an object-orientated job scheduler (15), the job scheduler (15) comprising:
a plurality of job request objects containing details of respective jobs to be scheduled,
a plurality of job run objects containing run details for respective jobs,
means for searching the job run objects to select candidate job run objects for execution, and
means for executing the selected candidate job run objects;
**characterised in that** the system further comprises:
(a) a plurality of frequency objects, containing information specifying repetition patterns for respective job request objects; and
(b) means responsive to completion of a job run object, for using the frequency object associated with the job request object corresponding to said completed job run object to create a new job run object containing details of a next run of the job.

2. A computer system (10 - 20) according to Claim 1, wherein each job run object includes a run date, and wherein the means for searching the job run objects selects a job run object as a candidate job for execution only if said job run object contains the current date as its run date.

3. A computer system (10 - 20) according to either preceding claim, wherein each job run object includes restart information enabling the associated job to be restarted in the event of failure, and the system includes means for updating this restart information at checkpoints within the execution of the job.

4. A computer system (10 - 20) according to any preceding claim, further including means for creating dependency objects, containing information specifying dependencies between jobs, and wherein the means for searching the job run objects selects a job run object as a candidate for execution only if the dependency object associated with the corresponding job request object indicates no dependencies on any uncompleted jobs.

5. A computer system (10 - 20) according to any preceding claim, wherein each job request object holds information identifying the process that is to perform the associated job.

6. A computer system (10 - 20) according to Claim 5, wherein each job request object also holds a timestamp indicating when the process last reported that it had completed a predetermined unit of processing, and wherein the system further includes means for indicating that a process has failed if a report has not been received from a process within a predetermined time period as indicated by its timestamp.

7. A computer system (10 - 20) according to any preceding claim, further including:
(a) means for associating each job request object with one of a set of predefined job streams;
(b) means for defining an active time period for each of the job streams; and
(c) means for allowing a job request object to be selected for execution only if its job stream is currently within its active time period.

8. A method for scheduling jobs in a computer system (10 - 20), comprising:
creating a plurality of job request objects containing details of respective jobs;
creating a plurality of job run objects containing run details for respective jobs;
searching the job run objects to select candidate job run objects for execution; and
executing the selected candidate job run objects,
**characterised in that** the method further comprises:
(a) creating a plurality of frequency objects, containing information specifying repetition patterns for respective job request objects; and
(b) when a job run object has been completed, using the frequency object associated with the job request object corresponding to said completed job run object to create a new job run object containing details of a next run of the job.

9. A method according to Claim 8, wherein each job run object includes a run date, and wherein the step of searching the job run objects comprises selecting a job run object as a candidate job for execution only if said job run object contains the current date as its run date.

10. A method according to Claim 8 or 9, further including:
(a) storing restart information in each job run object, for enabling the associated job to be restarted in the event of failure; and
(b) updating this restart information at checkpoints within the execution of the job.

11. A method according to any of Claims 8 to 10, further including the step of creating dependency objects, containing information specifying dependencies between jobs, and wherein the step of searching the job run objects comprises selecting a job run object as a candidate for execution only if the dependency object associated with the corresponding job request object indicates no dependencies on any uncompleted jobs.

12. A method according to any one of Claims 8 to 11, including storing in each job request object information identifying the process that is to perform the associated job.

13. A method according to Claim 12, further including the steps:
(a) storing in each job request object a timestamp indicating when the process last reported that it had completed a predetermined unit of processing; and
(b) indicating that a process has failed if a report has not been received from a process within a predetermined time period, as indicated by its timestamp.

14. A method according to any one of Claims 8 to 13, further including the steps of:
(a) associating each job request object with one of a set of predefined job streams;
(b) defining an active time period for each of the job streams; and
(c) allowing a job request object to be selected for execution only if its job stream is currently within its active time period.

## Patentansprüche

1. Computersystem (10-20), das einen objektorientierten Job-Scheduler (15) enthält, wobei der Job-Scheduler (15) umfasst:
eine Vielzahl von Auftragsanforderungs-Objekten, die Details jeweiliger zu koordinierender Aufträge enthalten,
eine Vielzahl von Auftragsabwicklungs-Objekten, die Abwicklungsdetails für jeweilige Aufträge enthalten,
eine Einrichtung, mit der die Auftragabwicklungs-Objekte durchsucht werden, um mögliche Auftragabwicklungs-Objekte zur Ausführung auszuwählen, und eine Einrichtung zum Ausführen der ausgewählten möglichen Auftragabwicklungs-Objekte;
**dadurch gekennzeichnet, dass** das System des Weiteren umfasst:
(a) eine Vielzahl von Häufigkeits-Objekten, die Informationen enthalten, die Wiederholungsmuster für jeweilige Auftraganforderungs-Objekte angeben; und
(b) eine Einrichtung, die auf den Abschluss eines Auftragabwicklungs-Objektes anspricht und die das Häufigkeits-Objekt, das mit dem Auftraganforderungs-Objekt verknüpft ist, das dem abgeschlossenen Auftragabwicklungs-Objekt entspricht, verwendet, um ein neues Auftragabwicklungs-Objekt zu schaffen, das Details einer nächsten Ausführung des Auftrags enthält.

2. Computersystem (10-20) nach Anspruch 1, wobei jedes Auftragabwicklungs-Objekt ein Abwicklungsdatum enthält und die Einrichtung zum Durchsuchen der Auftragabwicklungs-Objekte ein Auftragabwicklungs-Objekt als einen möglichen Auftrag zur Ausführung nur dann auswählt, wenn das Auftragabwicklungs-Objekt das aktuelle Datum als sein Abwicklungsdatum enthält.

3. Computersystem (10-20) nach beiden vorangehenden Ansprüchen, wobei jedes Auftragabwicklungs-Objekt Neustart-Informationen enthält, die es ermöglichen, den verknüpften Auftrag im Falle eines Fehlers neu zu starten, und das System eine Einrichtung zum Aktualisieren dieser Neustart-Informationen an Prüfpunkten innerhalb der Ausführung des Auftrags enthält.

4. Computersystem (10-20) nach einem der vorangehenden Ansprüche, das des Weiteren eine Einrichtung zum Schaffen von Abhängigkeits-Objekten enthält, die Informationen enthalten, die Abhängigkeiten zwischen Aufträgen angeben, und wobei die Einrichtung zum Durchsuchen der Auftragabwicklungs-Objekt ein Auftragabwicklungs-Objekt als einen Kandidaten zur Ausführung nur dann auswählt, wenn das mit dem entsprechenden Auftragsanforderungs-Objekt verknüpften Abhängigkeits-Objekt keine Abhängigkeiten von etwaigen nicht abgeschlossenen Aufträgen anzeigt.

5. Computersystem (10-20) nach einem der vorangehenden Ansprüche, wobei jedes Auftraganforderungs-Objekt Informationen beinhaltet, die den Prozess identifizieren, der den verknüpften Auftrag durchführen soll.

6. Computersystem (10-20) nach Anspruch 5, wobei jedes Auftraganforderungs-Objekt des Weiteren einen Zeitstempel beinhaltet, der anzeigt, wann der Prozess zuletzt berichtet hat, dass er eine vorgegebene Verarbeitungseinheit abgeschlossen hat, und das System des Weiteren eine Einrichtung enthält, die anzeigt, dass ein Prozess fehlgeschlagen ist, wenn von einem Prozess entsprechend der Anzeige durch seinen Zeitstempel innerhalb eines vorgegebenen Zeitraums kein Bericht empfangen worden ist.

7. Computersystem (10-20) nach einem der vorangehenden Ansprüche, das des Weiteren enthält:
(a) eine Einrichtung zum Verknüpfen jedes Auftraganforderungs-Objektes mit einem einer Gruppe vordefinierter Auftragsströme;
(b) eine Einrichtung zum Definieren eines aktiven Zeitraums für jeden der Auftragsströme; und
(c) eine Einrichtung, die zulässt, dass ein Auftraganforderungs-Objekt nur zur Ausführung ausgewählt wird, wenn sich sein Auftragsstrom aktuell in seinem aktiven Zeitraum befindet.

8. Verfahren zum Koordinieren von Aufträgen in einem Computersystem (10-20), das umfasst:
Schaffen einer Vielzahl von Auftragsanforderungs-Objekten, die Details jeweiliger Aufträge enthalten;
Schaffen einer Vielzahl von Auftragabwicklungs-Objekten, die Abwicklungsdetails jeweilige Aufträge enthalten;
Durchsuchen der Auftragabwicklungs-Objekte, um mögliche Auftragabwicklungs-Objekte zur Ausführung auszuwählen; und
Ausführen der ausgewählten möglichen Auftragabwicklungs-Objekte,
**dadurch gekennzeichnet, dass** das Verfahren des Weiteren umfasst:
(a) Schaffen einer Vielzahl von Häufigkeits-Objekten, die Informationen enthalten, die Wiederholungsmuster für jeweilige Auftraganforderungs-Objekte angeben; und
(b) wenn ein Auftragabwicklungs-Objekt abgeschlossen worden ist, Verwenden des Häufigkeits-Objektes, das mit dem Auftraganforderungs-Objekt verknüpft ist, das dem abgeschlossenen Auftragabwicklungs-Objekt entspricht, um ein neues Auftragabwicklungs-Objekt zu schaffen, das Details einer nächsten Abwicklung des Auftrags enthält.

9. Verfahren nach Anspruch 8, wobei jedes Auftragabwicklungs-Objekt ein Abwicklungsdatum enthält und wobei der Schritt des Durchsuchens der Auftragabwicklungs-Objekte umfasst, dass ein Auftragabwicklungs-Objekt als ein möglicher Auftrag zur Ausführung nur dann ausgewählt wird, wenn das Auftragabwicklungs-Objekt das aktuelle Datum als sein Abwicklungsdatum enthält.

10. Verfahren nach Anspruch 8 oder 9, das des Weiteren einschließt:
(a) Speichern von Neustart-Informationen in jedem Auftragabwicklungs-Objekt, die es ermöglichen, den verknüpften Auftrag im Falle eines Fehlers neu zu starten; und
(b) Aktualisieren dieser Neustart-Information an Prüfpunkten innerhalb der Ausführung des Auftrags.

11. Verfahren nach einem der Ansprüche 8 bis 10, das des Weiteren den Schritt des Schaffens von Abhängigkeits-Objekten einschließt, die Informationen enthalten, die Abhängigkeiten zwischen Aufträgen angeben, und wobei der Schritt des Durchsuchens der Auftragabwicklungs-Objekte umfasst, dass ein Auftragabwicklungs-Objekt als ein Kandidat zur Ausführung nur dann ausgewählt wird, wenn das entsprechende Auftraganforderungs-Objekt keine Abhängigkeiten von etwaigen nicht abgeschlossenen Aufträgen anzeigt.

12. Verfahren nach einem der Ansprüche 8 bis 11, das Speichern von Informationen, die den Prozess identifizieren, der den damit verknüpften Auftrag durchführen soll, in jedem Auftraganforderungs-Objekt einschließt.

13. Verfahren nach Anspruch 12, das des Weiteren die folgenden Schritte einschließt:
(a) Speichern eines Zeitstempels, der anzeigt, wann der Prozess zuletzt berichtet hat, dass er eine vorgegebene Verarbeitungseinheit abgeschlossen hat, in jedem Auftraganforderungs-Objekt; und
(b) Anzeigen, dass ein Prozess fehlgeschlagen ist, wenn von einem Prozess entsprechend der Anzeige durch seinen Zeitstempel innerhalb eines vorgegebenen Zeitraums kein Bericht empfangen worden ist.

14. Verfahren nach einem der Ansprüche 8 bis 13, das des Weiteren die folgenden Schritte einschließt:
(a) Verknüpfen jedes Auftraganforderungs-Objektes mit einem einer Gruppe vordefinierter Auftragsströme;
(b) Definieren eines aktiven Zeitraums für jeden der Auftragsströme; und
(c) Zulassen, dass ein Auftraganforderungs-Objekt zur Ausführung ausgewählt wird, nur dann, wenn sich sein Auftragsstrom aktuell in seinem aktiven Zeitraum befindet.

## Revendications

1. Système informatique (10-20) comprenant un programmateur de tâches orienté objets (15), le programmateur de tâches (15) comprenant :
une pluralité d'objets de requête de tâches contenant des détails de tâches respectives à programmer,
une pluralité d'objets de réalisation de tâches contenant des détails de réalisation pour des tâches respectives,
des moyens pour chercher les objets de réalisation de tâches afin de sélectionner des objets de réalisation de tâches candidates pour exécution, et
des moyens pour exécuter les objets de réalisation de tâches candidates sélectionnés ;
**caractérisé en ce que** le système comprend en outre :
(a) une pluralité d'objets de fréquence, contenant des informations spécifiant des motifs de répétition pour des objets de requête de tâches respectifs ; et
(b) des moyens sensibles à l'achèvement d'un objet de réalisation de tâche pour utiliser l'objet de fréquence associé à l'objet de requête de tâche correspondant audit objet de réalisation de tâche achevé pour créer un nouvel objet de réalisation de tâche contenant des détails d'une réalisation suivante de la tâche.

2. Système informatique (10-20) selon la revendication 1, dans lequel chaque objet de réalisation de tâche comprend une date de réalisation et dans lequel les moyens de recherche des objets de réalisation de tâches sélectionnent un objet de réalisation de tâche comme tâche candidate pour exécution uniquement si ledit objet de réalisation de tâche contient la date du jour comme date de réalisation.

3. Système informatique (10-20) selon l'une quelconque des revendications précédentes, dans lequel chaque objet de réalisation de tâche comprend des informations de redémarrage permettant de redémarrer la tâche associée en cas d'échec et le système comprend des moyens pour mettre à jour ces informations de redémarrage aux points de contrôle lors de l'exécution de la tâche.

4. Système informatique (10-20) selon l'une quelconque des revendications précédentes, comprenant en outre des moyens pour créer des objets de dépendance contenant des informations spécifiant des dépendances entre des tâches et dans lequel les moyens pour chercher les objets de réalisation de tâches sélectionnent un objet de réalisation de tâche comme candidat pour exécution uniquement si l'objet de dépendance associé à l'objet de requête de tâche correspondant n'indique aucune dépendance sur des tâches quelconque non terminées.

5. Système informatique (10-20) selon l'une quelconque des revendications précédentes, dans lequel chaque objet de requête de tâche contient des informations identifiant le procédé qui va effectuer la tâche associée.

6. Système informatique (10-20) selon la revendication 5, dans lequel chaque objet de requête de tâche contient également un timbre temporel indiquant la date à laquelle le procédé a rapporté pour la dernière fois avoir effectué une unité prédéterminée de traitement et dans lequel le système comprend en outre des moyens pour indiquer qu'un procédé a échoué si un rapport n'a pas été reçu d'un procédé au cours d'une période de temps prédéterminée comme indiqué par son timbre temporel.

7. Système informatique (10-20) selon l'une quelconque des revendications précédentes, comprenant en outre :
(a) des moyens pour associer chaque objet de requête de tâche à un flux d'un ensemble de flux de tâches prédéfini ;
(b) des moyens pour définir une période de temps active pour chacun des flux de tâches ; et
(c) des moyens pour pouvoir sélectionner un objet de requête de tâche pour exécution uniquement si son flux de tâches se trouve actuellement dans sa période de temps active.

8. Procédé pour programmer des tâches dans un système informatique (10-20), comprenant les étapes consistant à :
créer une pluralité d'objets de requête de tâches contenant des détails de tâches respectives ;
créer une pluralité d'objets de réalisation de tâches contenant des détails de réalisation de tâches respectives ;
chercher les objets de réalisation de tâches pour sélectionner des objets de réalisation de tâches candidates pour exécution ; et
exécuter les objets de réalisation de tâches candidates sélectionnés,
**caractérisé en ce que** le procédé comprend en outre les étapes consistant à :
(a) créer une pluralité d'objets de fréquence, contenant des informations spécifiant des motifs de répétition pour des objets de requête de tâches respectifs ; et
(b) utiliser, lorsqu'un objet de réalisation de tâche a été effectué, l'objet de fréquence associé à l'objet de requête de tâche correspondant audit objet de réalisation de tâche effectué pour créer un nouvel objet de réalisation de tâche contenant des détails d'une réalisation ultérieure de la tâche.

9. Procédé selon la revendication 8, dans lequel chaque objet de réalisation de tâche comprend une date de réalisation et dans lequel l'étape de recherche des objets de réalisation de tâches comprend la sélection d'un objet de réalisation de tâche comme tâche candidate pour exécution uniquement si ledit objet de réalisation de tâche contient la date du jour comme date de réalisation.

10. Procédé selon la revendication 8 ou 9, comprenant en outre les étapes consistant à :
(a) stocker des informations de redémarrage dans chaque objet de réalisation de tâche pour pouvoir redémarrer la tâche associée en cas d'échec ; et
(b) mettre à jour ces informations de redémarrage aux points de contrôle dans l'exécution de la tâche.

11. Procédé selon l'une quelconque des revendications 8 à 10, comprenant en outre l'étape de création d'objets de dépendance contenant des informations spécifiant des dépendances entre les tâches, et dans lequel l'étape de recherche des objets de réalisation de tâches comprend la sélection d'un objet de réalisation de tâche comme candidat pour exécution uniquement si l'objet de dépendance associé à l'objet de requête de tâche correspondant n'indique aucune dépendance sur des tâches quelconques non effectuées.

12. Procédé selon l'une quelconque des revendications 8 à 11, comprenant le stockage dans chaque objet de requête de tâche d'informations identifiant le procédé qui va effectuer la tâche associée.

13. Procédé selon la revendication 12, comprenant en outre les étapes consistant à :
(a) stocker dans chaque objet de requête de tâche un timbre temporel indiquant à quel moment le procédé a rapporté pour la dernière fois qu'il a effectué une unité de traitement prédéterminée ; et
(b) indiquer qu'un procédé a échoué s'il n'a pas été reçu de rapport d'un procédé dans une période de temps prédéterminée, comme indiqué par son timbre temporel.

14. Procédé selon l'une quelconque des revendications 8 à 13, comprenant en outre les étapes consistant à :
(a) associer chaque objet de requête de tâche à un flux d'un ensemble de flux d'objets de requête de tâches prédéterminé ;
(b) définir une période de temps active pour chacun des flux de tâches ; et
(c) pouvoir sélectionner un objet de requête de tâche pour exécution uniquement si son flux d'objets de requête de tâches est actuellement dans sa période de temps active.
